(19) Europäisches Patentamt
European Patent Office
Office européen des brevets

(11) EP 4 708 109 A1

(12) EUROPEAN PATENT APPLICATION
published in accordance with Art. 153(4) EPC

(43) Date of publication:
11.03.2026 Bulletin 2026/11

(51) International Patent Classification (IPC):
G06F 30/17 (2020.01)

(21) Application number: 25802496.7

(22) Date of filing: 20.02.2025

(86) International application number:
PCT/CN2025/078212

(87) International publication number:
WO 2025/236790 (20.11.2025 Gazette 2025/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.05.2024 CN 202410608351

(71) Applicant: Dongfang Electric Machinery Co., Ltd.
Deyang, Sichuan 618000 (CN)

(72) Inventors:
• LIANG, Quanwei
Sichuan 618000 (CN)
• FAN, Jiayi
Sichuan 618000 (CN)

• ZHOU, Shun
Sichuan 618000 (CN)
• CENG, Mingfu
Sichuan 618000 (CN)
• MA, Yanmei
Sichuan 618000 (CN)
• SONG, Min
Sichuan 618000 (CN)
• ZHANG, Jian
Sichuan 618000 (CN)
• WANG, Zhaoning
Sichuan 618000 (CN)
• CHEN, Taiping
Sichuan 618000 (CN)

(74) Representative: Herrmann, Daniel
Boehmert & Boehmert
Anwaltspartnerschaft mbB
Pettenkoferstrasse 22
80336 München (DE)

(54) OPTIMIZATION METHOD, QUANTITATIVE EVALUATION METHOD, AND BIDIRECTIONAL FEEDBACK METHOD FOR S-CHARACTERISTIC CURVE

(57) The present invention provides methods for optimizing and quantitatively evaluating S characteristic curves, and bi-directional feedback, relating to the technical field of characteristic analysis of pump-turbines. The optimization method divides the regions of the S characteristic curves, namely the "two-openings and three-regions," and provides optimization approaches for different regions to improve transient process characteristics. A set of characteristic quantitative parameters of the large-opening S characteristic curve is established to evaluate and guide optimization direction. By comprehensively balancing hydraulic performance and transient process characteristics, a bi-directional feedback process for hydraulic development and transient process characteristic optimization is established using the method for quantitatively evaluating large-opening S characteristics and the "two-openings and three-regions" method. The present method enables better feedback guidance of pump-turbine hydraulic development and optimization research, thereby providing solid technical support for the safe and stable operation of power stations.

FIG. 1

EP 4 708 109 A1

## Description

## Technical Field

The present invention relates to the technical field of characteristic analysis of pump-turbines, and more particularly to methods for optimizing and quantitatively evaluating S characteristic curves, and bi-directional feedback.

## Background

For pumped storage power stations, the hydraulic transient process directly impacts station safety. The main objective of studying the transient process in pumped storage power stations is to ensure that, under various transient process operating conditions, the characteristic parameters of each hydraulic unit of the entire station-in particular the rise in rotational speed during load rejection of the unit, the pressure rise in the spiral case, and the vacuum degree in the draft-tube-remain within the station's safe operating control limits. In engineering practice, beyond the layout of the water conveyance system and the closing law of guide vanes, the key factor influencing the characteristic of transient process of pump-turbines is the unit's intrinsic characteristics, especially the S characteristic of pump-turbines.

Regarding the S characteristic of pump-turbines, at the 1998 Annual Academic Conference of the 98 Special Committee on Pumped Storage of the China Society for Hydropower Engineering, ZHOU Yi, GOU Dongming et al. presented a paper entitled "Pressure Pulsation in the Transient Process of Storage power stations," later included in the annual academic conference proceedings of the 98 Special Committee on Pumped Storage of the China Society for Hydropower Engineering, and first published on WanFang Data on December 8, 2001. That study concludes that, during load rejection of a pump-turbine unit, the rotational speed of the unit approaches a runaway speed, and the unit readily enters the "S" region and exhibits strong pressure pulsations caused by the pump-turbine's inherent characteristics, which can jeopardize the unit's safe and stable operation.

On November 18, 2014, YOU Qiusen published "Study on the Influence of Reversible Unit Model Characteristic Curves on Transient Process" in the 2014 Collection of Pumped Storage Power Station Construction. The paper holds that the S characteristic of a pump-turbine has a significant impact on transient-process calculation results, and that, at the preliminary design stage of a pumped storage power station, one should select an appropriate model runner four-quadrant curve for transient-process calculations.

On April 2, 2016, RONG Hong, SONG Xufeng, YAND Wendao, PU Nannan, QIN Xiaofeng, et al. published "Research of Determining Method to "S" Characteristics for Pumped Storage Units" in Hydropower and Pumped Storage. That work proposes a method for determining the S characteristics of pumped storage units and, innovatively, the concept of "Z" characteristics, presenting a qualitative analysis of the effect of "Z" characteristics on vibration stability of reversible units, with emphasis on the rapidity/gradualness of transitions along the constant opening lines.

On May 1, 2016, LIU Yan-na published a doctoral dissertation at Wuhan University titled "Effects of S-shaped Characteristics on Transient process of Pumped-hydro Energy Storage Station." The dissertation holds that, according to the sign of the slope at operating points along the S characteristic curve of a pump-turbine, the characteristic curve is divided into three regions-Region 1, Region 2, and Region 3-separated by two singular points of the S curve, to explore correlations between the slope of the S characteristic curve and the rate of rise of water-hammer pressure under transient conditions.

Building upon the above literature, on February 20, 2018, FAN Jiayi, WEN Shujie, CHEN Taiping, ZHANG Jian, WANG Lunqi, et al. published "Preliminary Study on the Quantitative Evaluation Method of "S" Characteristic of the Pump Turbine Four Quadrants Curves" in Hydropower and Pumped Storage. That paper proposes a group of specific quantitative indices to evaluate the merits of four-quadrant S characteristics, by establishing an intrinsic link between the smoothness of the S characteristic curve and the characteristic angle of the transient process, so that the magnitude of that characteristic angle can evaluate the S characteristic.

Regarding optimization of S characteristics, in October 2017, FAN Jiayi, WEN Shujie, CHEN Taiping, WANG Lunqi, ZHANG Jian, et al. published "Study on the Influence of S Characteristic Optimization on Draft-Tube Inlet Pressure during Load Rejection" in the Proceedings of the 21st Academic Symposium on Hydropower Equipment in China. By studying the region where the minimum value of draft-tube inlet pressure occurs, the paper identifies two key regions for optimization of the S-region curve and their optimization directions, and sketches different research schemes for the two key regions, with the aim of feedback-guiding hydraulic development of pump-turbines, thereby gradually forming a bi-directional (positive/negative) feedback mechanism between hydraulic development and transient-process research. The preliminary conclusions are:

(1) Under certain conditions, assuming that pressure pulsations in the region where the draft-tube inlet pressure extreme occurs remain unchanged or improve relatively during load rejection, by optimizing the S characteristic curve in the vicinity region from the braking zone to the reverse-pump zone, one can increase the calculated extreme of the minimum draft-tube inlet pressure during the transient process, thereby increasing the mean of the draft-tube inlet pressure and then improving the draft-tube inlet pressure. That is, by raising the calculated extreme of the minimum draft-tube inlet pressure to obtain greater safety margin, the minimum draft-tube inlet pressure can be maintained within control requirements.

(2) Under certain conditions, by optimizing the portion of the S characteristic curve near the runaway line, the amplitude of draft-tube inlet pressure pulsation can be reduced, thus improving the draft-tube inlet pressure and its minimum during load rejection tests. Preliminary studies indicate that, after optimizing the S characteristic curve in this region, the calculated extreme of the minimum draft-tube inlet pressure of the unit stays essentially unchanged or slightly increases; meanwhile, because the maximum unit speed and the maximum speed at the instant of that minimum draft-tube inlet pressure are both noticeably reduced, the oscillation amplitude of the water mass in the vicinity region decreases, leading to a reduction in pressure pulsation amplitude. This improves instantaneous pressure fluctuations at the draft-tube inlet of the unit during load rejection tests, thereby effectively improving the pressure distribution at the draft-tube inlet during load rejection and increasing the minimum pressure at the draft-tube inlet.

The foregoing related art shows that existing research results explain how S characteristics affect transient processes of power stations, propose certain S characteristic determination ideas, and tentatively identify key optimization regions and related optimization directions for S characteristics curves. However, such related art represented by the above papers remains incomplete in the research of S characteristic curves of pump-turbines and relatively complex and limited in optimization methods. No systematic research has been carried out on different transient operating scenarios under varying heads or power levels, nor has there been any study focusing on the S characteristic curve at locations directly related to the S characteristic margin, which is a key indicator determining whether a pump-turbine can be successfully synchronized and connected to the grid. When the head or power of the pump-turbine changes, that is, under different transient operating scenarios, specifically from synchronization to full load, the related art has not conducted systematic investigations. Moreover, when the S characteristic margin does not meet the requirement, there is no simple and rapid adjustment or optimization method available to satisfy the design requirement for the S characteristic margin. As a result, grid synchronization of the pump-turbine can be hindered, preventing the pump-turbine from being synchronized to the grid and operating normally.

In addition, although the paper "Preliminary Study on the Quantitative Evaluation Method of "S" Characteristic of the Pump Turbine Four Quadrants Curves" links the smoothness of the S characteristic curve and the characteristic angle of the transient process and uses the magnitude of the characteristic angle to evaluate S characteristics, this evaluation method only conducts assessment and analysis under a specific scenario, namely performing transient-process characteristic analysis solely on the S characteristic curve represented by the rated opening, and it proposes the theory of a transient-process characteristic angle. In reality, during load rejection, as movable guide vanes close dynamically, the operating trajectory of the turbine covers a wide range, transitioning from full load to partial load. Under different rotation angles and openings during dynamic closing of movable guide vanes, the S characteristic will affect the parameters of the transient process. Moreover, in actual operation, when the turbine is running under partial load, load rejection may also occur; in such cases, the S characteristic curve likewise influences the transient-process parameters under partial load. Therefore, this scheme is, on the one hand, relatively complex, and on the other hand, when faced with S characteristic curves under various openings across the partial load to full load range, its applicability is limited and the evaluation results are less than ideal.

In addition, existing optimization approaches cannot achieve hierarchical step-by-step optimization, nor do they incorporate quantitative evaluation feedback to the hydraulic development demand side to realize dynamic feedback and adjustment design throughout the entire process of hydraulic research and development (R&D).

## Summary

To overcome the above deficiencies in the related art, the present invention provides methods for optimizing and quantitatively evaluating S characteristic curves, and bi-directional feedback. First, the invention addresses the problem that the related art fails to divide S characteristic curves according to different guide vane openings, which prevents precise identification of optimized regions under different guide vane openings and thereby lacks a simple and rapid regional optimization approach for improving different regions of the S characteristic curve and increasing the S characteristic margin.

Second, the invention further addresses the issue of the complexity of existing methods for quantitatively evaluating S characteristics, by proposing, from a systematic perspective, an evaluation method covering the range from partial load to full load.

Third, the invention further provides targeted optimization strategies absent in the related art, which cannot achieve hierarchical step-by-step optimization or integrate quantitative evaluation with feedback to the hydraulic development demand side, thereby enabling dynamic feedback and adjustment design throughout the entire process of hydraulic R&D.

The invention is implemented by the following technical solutions.

A method for optimizing S characteristic curves includes the following operations:

a, establishing S characteristic curves of a pump-turbine: establishing, based on different guide vane openings, at least two types of S characteristic curves;

b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of $35\% a_0 \leq X \leq 100\% a_0$, and Y is within a range of $0 \leq Y < 35\% a_0$;

c, dividing an optimization region based on the small-opening S characteristic curves: dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference; and

d, optimizing the optimization region associated with the small-opening S characteristic curves: shifting the intersection point formed between the small-opening S characteristic curve and the horizontal axis at zero unit discharge along a direction where a unit speed on the horizontal axis increases, thereby driving a portion of the small-opening S characteristic curve near the intersection point to move along the direction where the unit speed on the horizontal axis increases; as such, this allows the S characteristic margin corresponding to the small-opening to be increased in a very simple and efficient manner, thereby further effectively improving the grid-synchronization characteristics of the unit.

Further, in operation b, for a 300 MW unit with a head of 400 m, the guide vane opening of the pump-turbine varies between 0° and 26°, and wherein the large-opening S characteristic curve corresponds to a guide vane opening in a range of 9.1° to 26° and is represented by a rated opening line $n_{11}$-$Q_{11}$, while the small-opening S characteristic curves each correspond to a guide vane opening in a range of 0° to 9° and are represented by small-opening lines $n_{11}$-$Q_{11}$.

Further, in operation c, between the upward and downward variations within the preset range corresponding to the first region, the upward variation is toward the first quadrant, and the downward variation is toward the fourth quadrant.

Further, in operation c, for a 300 MW unit with a head of 400 m as an example, the guide vane openings are provided for tests to obtain the S characteristic curves under the guide vane openings. After the S characteristic curves are classified into the one or more large-opening S characteristic curves and the one or more small-opening S characteristic curves, the optimization region associated with the small-opening S characteristic curves is a region where each small-opening S characteristic curve with unit discharge as ordinates undergoes upward and downward variations within the preset range along a vertical axis representing unit discharge, with the intersection point formed between the small-opening S characteristic curve and the horizontal axis at zero unit discharge as a reference, wherein the preset range specifically refers to a range of -10% to +40% $Q_{11MAX}$, +40% represents a variation into the first quadrant, -10% represents a variation into the fourth quadrant, and $Q_{11MAX}$ denotes a maximum value of unit discharge on the ordinates of the small-opening S characteristic curve.

A method for optimizing S characteristic curves includes the following operations:

a, establishing S characteristic curves of a pump-turbine: establishing, based on different guide vane openings, at least two types of S characteristic curves;

b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of $35\% a_0 \leq X \leq 100\% a_0$, and Y is within a range of $0 \leq Y < 35\% a_0$;

c, dividing an optimization region based on the small-opening S characteristic curves: dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference; and

d, optimizing the optimization region associated with the small-opening S characteristic curves: shifting the intersection point formed between the small-opening S characteristic curve and the horizontal axis at zero unit discharge along a direction where a unit speed on the horizontal axis increases, thereby driving a portion of the small-opening S characteristic curve near the intersection point to move along the direction where the unit speed on the horizontal axis increases; as such, this allows the S characteristic margin corresponding to the small-opening to be improved in a very simple and efficient manner, thereby further effectively improving the grid-synchronization characteristics of the unit;

wherein the method further includes an operation of dividing one or more optimization regions based on the large-opening S characteristic curve: dividing a region between the braking zone and the reverse-pump zone based on the large-opening S characteristic curve as a third region, wherein the third region specifically refers to a region where the large-opening S characteristic curve undergoes upward and downward variations within a preset range, with an intersection point formed between the large-opening S characteristic curve and the horizontal axis at zero unit discharge as a reference, and dividing, as a second region, a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings.

Further, in the operation of dividing the one or more optimization regions based on the large-opening S characteristic curve, between the upward and downward variations within the preset ranges corresponding to the third and second regions, the upward variation is toward a first quadrant, and the downward variation is toward a fourth quadrant.

Further, in the operation of dividing the one or more optimization regions based on the large-opening S characteristic curve, for a 300 MW unit with a head of 400 m as an example, the optimization region referred to as the third region specifically is a region where the large-opening S characteristic curve with unit discharge as ordinates undergoes upward and downward variations within the preset range, with the intersection point formed between the large-opening S characteristic curve and the horizontal axis at zero unit discharge as a reference, wherein the preset range specifically refers to a range of $\pm15\%$ $Q_{11MAX}$, and $Q_{11MAX}$ denotes a maximum value of unit discharge on the ordinates of the large-opening S characteristic curve.

Further, in the operation of dividing the one or more optimization regions based on the large-opening S characteristic curve, for a 300 MW unit with a head of 400 m as an example, the large-opening S characteristic curve in the second region is varied upward and downward within the preset range with the intersection point as a reference, the intersection point intersecting the large-opening S characteristic curve and the runaway line, wherein the preset range specifically refers to a range of -10% to +30% $Q_{11MAX}$, +30% represents a variation into a first quadrant, -10% represents a variation into a fourth quadrant , and $Q_{11MAX}$ denotes a maximum value of unit discharge on ordinates of the large-opening S characteristic curve.

Further, the method further includes an operation of optimizing the one or more optimization regions associated with the large-opening S characteristic curve by:

while the second region associated with the large-opening S characteristic curve is kept unchanged, optimizing the third region : increasing an abscissa of Point C on the S characteristic curve in the third region, such that the unit speed of the large-opening S characteristic curve with the unit discharge being zero is increased, a portion of the S curve near Point C is driven to move along a direction where a unit speed on the horizontal axis increases, and the mean pressure of draft-tube inlet is increased, wherein the abscissa of Point C corresponds to an abscissa of the intersection point between the large-opening S characteristic curve and the horizontal axis at zero unit discharge.

Further, the method further includes an operation of optimizing the one or more optimization regions associated with the large-opening S characteristic curve by:

while the third region associated with the large-opening S characteristic curve is kept unchanged, optimizing the second region in any of three ways:

1) reducing an abscissa of Point A on the large-opening S characteristic curve in the second region, the abscissa of Point A corresponding to an abscissa of a point at which the large-opening S characteristic curve has a maximum unit speed, such that the unit speed of Point A is reduced, and a portion of the large-opening S characteristic curve near Point A is driven to move along a direction of lower unit speed; or

2) increasing an ordinate of Point B on the large-opening S characteristic curve in the second region, the ordinate of Point B corresponding to an ordinate of the intersection point between the large-opening S characteristic curve and the runaway line, such that the unit discharge of Point B is increased, and a portion of the large-opening S characteristic curve near Point B is driven to move along a direction of increasing unit discharge; and

3) simultaneously performing the two optimization modes of 1) and 2).

The three ways allow optimization of the second region while the third region associated with the large-opening S characteristic curve is kept unchanged, and thus the pressure pulsations of the draft-tube inlet can be decreased.

Further, the method further includes an operation of optimizing the one or more optimization regions associated with the large-opening S characteristic curve by:

simultaneously optimizing the second and third regions associated with the large-opening S characteristic curve, by:

1) reducing an abscissa of Point A on the large-opening S characteristic curve in the second region, the abscissa of Point A corresponding to an abscissa of a point at which the large-opening S characteristic curve has a maximum unit speed, such that the unit speed of Point A is reduced, and a portion of the large-opening S characteristic curve near Point A is driven to move along a direction of lower unit speed; or

2) increasing an ordinate of Point B on the large-opening S characteristic curve in the second region, the ordinate of Point B corresponding to an ordinate of the intersection point between the large-opening S characteristic curve and the runaway line, such that the unit discharge of Point B is increased, and a portion of the large-opening S characteristic curve near Point B is driven to move along a direction of increasing unit discharge; and

3) simultaneously performing the two optimization modes of 1) and 2),

4) increasing an abscissa of Point C on the S characteristic curve in the third region, such that the unit speed of the large-opening S characteristic curve is increased when the unit discharge is zero.

Thus, the mean pressure of the draft-tube inlet can be increased, and the pressure pulsations of the draft-tube inlet can be decreased.

Further, the operation of establishing the S characteristic curves of the pump-turbine is performed by: fixing each guide vane opening for testing, arranging unit-speed values as abscissa to obtain corresponding unit-discharge values as ordinate, and connecting data points established through a smooth curve to form a S curve under the guide vane opening.

The S characteristic margin, also referred to as S-region margin, is defined on the $T_{11}$-$n_{11}$ four-quadrant characteristic curves. At the intersection point of a constant guide vane opening line with $n_{11}$ axis ($T_{11} = 0$), when the tangent at this point forms a 90° angle with $T_{11}$, the point is identified as the critical point of entry into the unstable S characteristic region. The S-region margin is the difference between the head corresponding to $n_{11}$ at this critical point and the minimum head. See GB 22581, *Basic Technical Conditions for Mixed-Flow Pump-Turbines*.

A method for quantitatively evaluating S characteristic curves includes the following operations:

a, establishing S characteristic curves of a pump-turbine: establishing, based on different guide vane openings, at least two types of S characteristic curves;

b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of 35% $a_0 \leq X \leq 100\%$ $a_0$, and Y is within a range of $0 \leq Y < 35\%$ $a_0$; and

c, dividing an optimization region based on the small-opening S characteristic curves: dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference;

wherein the method further includes an operation of dividing one or more optimization regions based on the large-opening S characteristic curve: dividing a region between the braking zone and the reverse-pump zone based on the large-opening S characteristic curve as a third region, wherein the third region specifically refers to a region where the large-opening S characteristic curve undergoes upward and downward variations within a preset range, with an intersection point formed between the large-opening S characteristic curve and the horizontal axis at zero unit discharge as a reference, and dividing, as a second region, a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings; and

wherein a ratio of runaway unit discharge on the large-opening S characteristic curve to a variation of unit speed on the large-opening S characteristic curve is defined as a quantitative parameter $\delta$, and the ratio is expressed as:

$$\delta = K_1 / K_2 \text{ (Formula 1)}$$

where in Formula 1, specific parameters are defined as follows:

$K_1$: An ordinate value of Point B which refers to the intersection point between the large-opening S characteristic curve and the runaway line, which represents runaway unit discharge at a given opening, the ordinate value expressed as $K_1 = Q_{11B}$; and

$K_2$: A difference between an abscissa value of Point A at which the large-opening S characteristic curve reaches a maximum unit speed and an abscissa value of Point C which refers to the intersection point between the large-opening S characteristic curve and the horizontal axis at zero unit discharge, which represents a variation of unit speed at a given opening, the difference expressed as $K_2 = n_{11A} - n_{11C}$.

A bi-directional feedback method for S characteristic curves includes:

an operation of conducting a hydraulic R&D model test;

an operation of establishing S characteristic curves of a pump-turbine based on the hydraulic R&D model test;

an operation of determining whether an S characteristic margin of the S characteristic curves meets a design requirement;

in response to the design requirement being met, proceeding to an operation of transient process simulation;

in response to the design requirement being not met, proceeding to an operation of establishing, based on different guide vane openings, at least two types of S characteristic curves, an operation of classifying the S characteristic curves into one or more large-opening S characteristic curves and one or more small-opening S characteristic curves, an operation of dividing an optimization region based on the small-opening S characteristic curves, an operation of dividing one or more optimization regions based on the large-opening S characteristic curve, an operation of optimizing the optimization region associated with the small-opening S characteristic curves, and an operation of feeding back the optimized results to the hydraulic R&D model test; or

in response to the design requirement remaining unmet, repeating the operation of optimizing the optimization region associated with the small-opening S characteristic curves, and feeding back the optimized results until the S characteristic margin meets the design requirement; and

an operation of determining whether a result of the transient process simulation meets a requirement;

in response to the requirement being met, completing current hydraulic development design; or

in response to the requirement being not met, proceeding to an operation of optimizing the one or more optimization regions associated with the large-opening S characteristic curve, and feeding back the optimized results to the hydraulic R&D model test.

Further, in operation of classifying the S characteristic curves into the one or more large-opening S characteristic curves and the one or more small-opening S characteristic curves, among the two types of S characteristic curves, one type of S characteristic curves established at a guide vane opening of X° is classified as the one or more large-opening S characteristic curves, and the other type of S characteristic curves established at a guide vane opening of Y° is classified as the one or more small-opening S characteristic curves, and wherein with $a_0$ being a rated opening, X is within a range of $35\% a_0 \leq X \leq 100\% a_0$, and Y is within a range of $0 \leq Y < 35\% a_0$.

Further, the operation of dividing the optimization region based on the small-opening S characteristic curves and the operation of dividing the one or more optimization regions based on the large-opening S characteristic curve include:

dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference.

Further, the operation of dividing the optimization region based on the small-opening S characteristic curves and the operation of dividing the one or more optimization regions based on the large-opening S characteristic curve include:

dividing a region between a braking zone and a reverse-pump zone based on the large-opening S characteristic curve as a third region, wherein the third region specifically refers to a region where the large-opening S characteristic curve undergoes upward and downward variations within a preset range, with an intersection point formed between the large-opening S characteristic curve and a horizontal axis at zero unit discharge as a reference; and

dividing, as a second region, a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings.

A bi-directional feedback method for S characteristic curves includes:

an operation of conducting a hydraulic R&D model test;

an operation of establishing S characteristic curves of a pump-turbine based on the hydraulic R&D model test;

an operation of determining whether an S characteristic margin of the S characteristic curves meets a design requirement;

in response to the design requirement being met, proceeding to an operation of transient process simulation;

in response to the design requirement being not met, proceeding to an operation of establishing, based on different guide vane openings, at least two types of S characteristic curves, an operation of classifying the S characteristic curves into one or more large-opening S characteristic curves and one or more small-opening S characteristic curves, an operation of dividing an optimization region based on the small-opening S characteristic curves, an operation of dividing one or more optimization regions based on the large-opening S characteristic curve, an operation of optimizing the optimization region associated with the small-opening S characteristic curves, and an operation of feeding back the optimized results to the hydraulic R&D model test; or

in response to the design requirement remaining unmet, repeating the operation of optimizing the optimization region associated with the small-opening S characteristic curves, and feeding back the optimized results until the S characteristic margin meets the design requirement; and

an operation of determining whether a result of the transient process simulation meets a requirement;

in response to the requirement being met, completing current hydraulic development design; or

in response to the requirement being not met, proceeding to an operation of optimizing the one or more optimization regions associated with the large-opening S characteristic curve, an

operation of quantitatively evaluating the optimized results, and an operation of feeding back the quantitatively-evaluated optimized results to the hydraulic R&D model test.

Further, in the operation of quantitatively evaluating the optimized results, a ratio of runaway unit discharge on the large-opening S characteristic curve to a variation of unit speed on the large-opening S characteristic curve is defined as a quantitative parameter.

Compared with the related art, the invention has the following beneficial effects:

1. The invention first establishes S characteristic curves and divides them by guide vane opening into large-opening and small-opening S characteristic curves. It prioritizes division of the optimization region associated with the small-opening S characteristic curve and shifts the intersection point formed between the small-opening S characteristic curve and the horizontal axis at zero unit discharge along the direction where the unit speed on the horizontal axis increases, thereby driving a portion of the small-opening S characteristic curve near the intersection point to move along the direction where the unit speed on the horizontal axis increases, thus optimizing the first region corresponding to small-opening. Compared with LIU Yan-na's doctoral dissertation titled "Effects of S-shaped Characteristics on Transient process of Pumped-hydro Energy Storage Station," when the current S characteristic margin is determined to be insufficient during hydraulic design, it suffices to optimize the first region associated with the small-opening S characteristic curve to simply and rapidly increase the small-opening S characteristic margin and improve grid-synchronization characteristics of the unit. In addition, transient process characteristics involve both the characteristics of grid-synchronization at small openings and the control of extreme values of transient process parameters at large openings. From grid-synchronization of pump-turbines to full load, the related art has not carried out systematic research in this respect. On the one hand, the S characteristic curve at small openings directly concerns a critical indicator of whether the pump-turbine can be successfully synchronized to the grid. On the other hand, during a load rejection process, as the movable guide vanes of the turbine dynamically close, the operating trajectory of the turbine covers a wide range, transitioning from full load to partial load. Under different rotation angles and openings during dynamic closing of movable guide vanes, S characteristics influence transient process parameters. Furthermore, in actual operation, load rejection may also occur when the turbine is operating at partial load, in which case S characteristic curves also affect transient process parameters under partial load. The present invention systematically extends the division of S characteristic regions to cover the entire S characteristic range. Such an approach is absent in the related art. The division principle proposed in the related art is clearly different from that proposed in the present invention, and the related art does not provide specific details about a systematic method for transient process characteristics, namely, it neither takes grid synchronization into account nor establishes a connection between the divided regions and the main influencing factors of the transient process.

2. In the present invention, one type of S characteristic curves established at a guide vane opening of $X°$ is classified as the one or more large-opening S characteristic curves, and the other type of S characteristic curves established at a guide vane opening of $Y°$ is classified as the one or more small-opening S characteristic curves, and wherein with a rated opening $a_0$ as a reference, X is within a range of $35\% a_0 \leq X \leq 100\% a_0$, and Y is within a range of $0 \leq Y < 35\% a_0$.

Compared with the related art, such division of guide vane openings systematically covers the entire operating process of turbines, including grid synchronization and operation up to full load. The present invention systematically extends the division of S characteristic regions to cover the entire S characteristic range, which is absent in the related art.

3. In the present invention, in operation a, two types of S characteristic curves are established based on different guide vane openings, i.e., large-opening S characteristic curves and small-opening S characteristic curves. This division allows factors influencing transient process characteristics to be considered in a region-division manner; and large openings affect extreme values of the transient process, while small openings affect grid synchronization stability. Considering both allows complete analysis of the S characteristic, while separating them allows different types of optimization to be implemented.

4. In the present invention, the small-opening S characteristic curve has an intersection point with the horizontal axis at zero unit discharge. Using this intersection point as a reference, upward and downward variations are applied to the small-opening S characteristic curve along the ordinate of unit discharge within the preset range. The specific range of variation is - 10% to + 40% $Q_{11MAX}$. Optimization within this range can address the problem of insufficient S characteristic margin. The determination of this range was established by the Applicant after numerous tests, which indicates that the range is related to the position of the runaway line and the horizontal axis. Generally, the runaway line is located around 30% $Q_{11MAX}$. The range between the runaway line and the horizontal axis, together with the margins at both ends, directly relates to a range of the S characteristic margin. By considering 10% $Q_{11MAX}$ at both ends, the final range is determined as -10% to +40% $Q_{11MAX}$. Optimization within this range is sufficient to meet the requirement, and standardizing this range can effectively improve optimization efficiency.

5. In the present invention, the third region associated with the large-opening S characteristic curve specifically refers to a region where the large-opening S characteristic curve undergoes upward and downward variations within the preset range, with the intersection point formed between the large-opening S characteristic curve and the horizontal axis at zero unit discharge as a reference, while the second region is a region where the large-opening S characteristic curve undergoes upward and downward variations within the preset range, with the intersection point formed between the large-opening S characteristic curve and the runaway line as a reference. With this division, the key transient process parameter, draft-tube pressure, can be divided into mean and pulsating pressure values for region-based optimization or separate optimizations, corresponding to the third region and the second region, respectively.

6. In the present invention, specific variation range corresponding to the second region (the optimization region) is ±15% $Q_{11MAX}$. This range is the most sensitive to transient process parameters, and optimization within this range can reduce the amplitude of pressure pulsations at the draft-tube inlet. Standardizing this range avoids blind optimization and effectively improves optimization efficiency.

7. In the present invention, specific variation range corresponding to the third region (the optimization region) is -10% to +30% $Q_{11MAX}$. This range is the most sensitive to transient process parameters, and optimization within this range can reduce the mean pressure at the draft-tube inlet. Standardizing this range effectively improves optimization efficiency.

8. In the present invention, the third region is optimized while the second region associated with the large-opening S characteristic curve is kept unchanged. Specifically, the abscissa of Point C on the S characteristic curve in the third region is increased, thereby increasing the unit speed of the large-opening S curve when the unit discharge is zero. This shifts the nearby portion of the S curve toward increasing unit speed and increases the mean pressure at the draft-tube inlet.

9. In the present invention, the second region is optimized while the third region associated with the large-opening S characteristic curve is kept unchanged, through three approaches. These optimizations can reduce pulsating pressure at the draft-tube inlet.

10. In the present invention, simultaneous optimization of the second and third regions associated with the large-opening S characteristic curve can increase the mean pressure and reduce the pulsating pressure at the draft-tube inlet, thereby better improving transient process extremes and effectively reducing draft-tube inlet pressure.

11. In the present invention, the method for quantitatively evaluating S characteristic curves adopts the ratio of the runaway unit discharge on the large-opening S characteristic curve to the variation in unit speed on the large-opening S characteristic curve as a quantitative parameter δ. Compared with the method disclosed in the paper "Preliminary Study on the Quantitative Evaluation Method of "S" Characteristic of the Pump Turbine Four Quadrants Curves" by FAN Jiayi et al., which uses transient process characteristic angles for evaluation of S characteristic, the present method is simpler and more practical. On the one hand, it simplifies the evaluation by replacing the characteristic angle evaluation method with an intuitive quantitative comparison of numerical values to judge the quality of the S characteristic at a given opening. On the other hand, it systematically extends the evaluation to the entire large-opening range, meaning the proposed evaluation method in the present invention applies to S characteristic curves at all openings from partial load to full load. This is absent in the related art.

12. In the present invention, the bi-directional feedback method of S characteristic curves balances hydraulic performance and transient process characteristics by employing the method for quantitatively evaluating large-opening "S" characteristics and the "two-openings and three-regions" approach to establish a bi-directional feedback process for hydraulic development and transient process optimization. In this approach, hydraulic development and transient process calculation complement each other to form a bi-directional feedback design system. Verified by practical projects, applying this optimization approach to analyze transient process characteristics of pump-turbines can better guide hydraulic development and research of pump-turbines in a feedback-guiding manner, thereby providing technical support for designing pump-turbines with both excellent hydraulic performance and favorable transient process characteristics, and further promoting the advancement of pumped storage power station construction.

13. In the present invention, the bi-directional feedback method for hydraulic development, based on the optimization and quantitative evaluation of S characteristic curves, emphasizes quantitative evaluation of large-opening S characteristics, enabling more accurate and efficient optimization, and providing better feedback guidance of pump-turbine hydraulic development and research. Verified by practical projects, applying this optimization approach to analyze transient process characteristics of pump-turbines can better guide hydraulic development and research of pump-turbines in a feedback-guiding manner, thereby providing technical support for designing pump-turbines with both excellent hydraulic performance and favorable transient process characteristics, and further promoting the advancement of pumped storage power station construction.

14. The bi-directional feedback mechanism proposed in the present invention can provide better feedback guidance for hydraulic development and optimization of pump-turbines. It provides technical support for designing pump-turbines with both excellent hydraulic performance and favorable transient process characteristics. Specifically, it emphasizes optimization of large-opening S characteristics, which are the most sensitive to transient process extremes, from the outset of hydraulic design. It also integrates optimization of small-opening S characteristics with large-opening S characteristics. While focusing on optimizing the S characteristic, it is also necessary to consider the optimization of the small-opening S characteristic. The bi-directional feedback mechanism not only guides optimization directions at the design source but also enables rapid regional optimization when transient process extremes or S characteristic margins fail to meet requirements.

## Brief Description of the Drawings

Hereinafter, the invention will be described in further detail with reference to the drawings and specific embodiments.

FIG. 1 is a schematic diagram of division of large-opening and small-opening S characteristic curves and optimization regions.

FIG. 2 is a schematic flow diagram of the optimization for optimization regions associated with a large-opening S characteristic curve.

FIG. 3 is a schematic flow diagram of a bi-directional feedback design method for hydraulic development based on optimization of S characteristic curves.

FIG. 4 is a schematic flow diagram of a bi-directional feedback design method for hydraulic development based on optimization and quantitative evaluation of S characteristic curves.

## Detailed Description

The principles and features of the invention are described below with reference to the drawings. The examples are explanatory and do not limit the scope of the invention.

Definitions:

Model test: Designing and fabricating a model device to simulate complex water dynamics in a laboratory to evaluate turbine performance under various operating states.

Transient process simulation: A transient process refers to the transient or short-term variation process in which a hydraulic unit shifts from one steady operating condition or state to another. Simulating this variation process constitutes the transient process simulation.

Hydraulic R&D: In brief, based on the design parameters of a hydropower station unit (such as head, power, rotational speed, efficiency, etc.), the internal components of the pump-turbine flow passage are designed, including profiles and dimensions of the flow passage, and blade profiles of flow-passing components. This process is referred to as hydraulic R&D.

The magnitude of opening: The magnitude of the rotation angle of movable guide vanes.

Embodiment 1

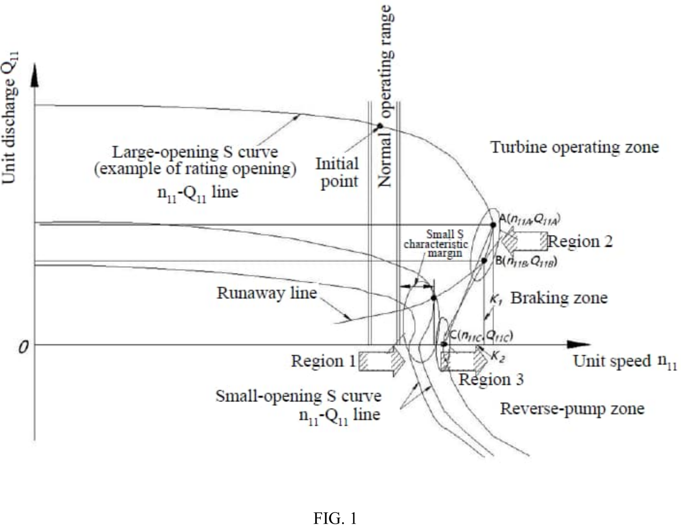

As shown in FIG. 1, the farther from the origin (i.e., larger abscissa and ordinate), the larger the guide vane opening of the S curve; conversely, the smaller the guide vane opening of the S curve. A test is conducted at a fixed guide vane opening, and unit-speed values as abscissa are arranged to obtain corresponding unit-discharge values as ordinate, and data points established are connected through a smooth curve to form a S curve under the guide vane opening. By setting different guide vane openings for tests, S curves corresponding to different guide vane openings can be obtained.

A method for optimizing S characteristic curves is provided. The method includes the following operations:

a, establishing S characteristic curves of a pump-turbine: establishing, based on different guide vane openings, two types of S characteristic curves;

b, classifying the S characteristic curves into one or more large-opening S characteristic curves and one or more small-opening S characteristic curves: among the two types of S characteristic curves, one type of S characteristic curves established at a guide vane opening of X° is classified as the one or more large-opening S characteristic curves, and the other type of S characteristic curves established at a guide vane opening of Y° is classified as the one or more small-opening S characteristic curves, wherein with $a_0$ being a rated opening, X is within the range of $35\% a_0 \leq X \leq 100\% a_0$, and Y is within the range of $0 \leq Y < 35\% a_0$;

c, dividing an optimization region based on the small-opening S characteristic curves: dividing the region between a braking zone and a reverse-pump zone based on the small-opening S characteristic curves as Region 1 (the first region), wherein Region 1 specifically refers to a region where each small-opening S characteristic curve undergoes upward and downward variations within a preset range, with an intersection point formed between the small-opening S characteristic curve and a horizontal axis at zero unit discharge as a reference;

d, optimizing the optimization region associated with the small-opening S characteristic curves: shifting the intersection point formed between the small-opening S characteristic curve and the horizontal axis at zero unit discharge along a direction where a unit speed (unit rotational speed) on the horizontal axis increases, thereby driving a portion of the small-opening S characteristic curve near the intersection point to move along the direction where the unit speed on the horizontal axis increases.

This example represents the most fundamental embodiment that reflects the original intention and inventive concept of the present invention. Prior to this, no prior art has ever disclosed a method of pre-classifying the S characteristic curves according to different guide vane openings, specifically dividing them into "two-openings," namely the large-opening S characteristic curve and the small-opening S characteristic curve. Compared with LIU Yan-na's doctoral dissertation entitled "Effects of S-shaped Characteristics on Transient process of Pumped-hydro Energy Storage Station", the present method enables, during hydraulic design, that when it is determined that the current S characteristic margin does not meet the requirement, optimization only needs to be performed on Region 1 of the small-opening S characteristic curve. This allows the S characteristic margin corresponding to the small-opening to be improved in a very simple and efficient manner, thereby further effectively improving the grid-synchronization characteristics of the unit.

Embodiment 2

Referring to FIG. 1, on the basis of Embodiment 1, a preferred approach is as follows: b of classifying the S characteristic curves into one or more large-opening S characteristic curves and one or more small-opening S characteristic curves, among the two types of S characteristic curves, one established at a guide vane opening of X° is classified as the one or more large-opening S characteristic curves, and the other established at a guide vane opening of Y° is classified as the one or more small-opening S characteristic curves, wherein with $a_0$ being a rated opening, X takes the value of $100\% a_0$, and Y takes the value of $30\% a_0$.

Embodiment 3

Referring to FIG. 1, on the basis of Embodiment 1, as one of the preferred embodiments of the method for optimizing S characteristic curves, in operation b, for a 300 MW unit with a head of 400 m, the guide vane opening of the pump-turbine varies between 0° and 26°. The large-opening S characteristic curve corresponds to the 26° guide vane opening, i.e., the rated opening line $n_{11}$-$Q_{11}$, while the small-opening S characteristic curve corresponds to the 3° guide vane opening, i.e., the small-opening line $n_{11}$-$Q_{11}$.

In operation c, regarding the upward and downward variations within the preset range of Region 1, the upward variation is toward the first quadrant, and the downward variation is toward the fourth quadrant.

In operation c, taking a 300 MW unit with a 400 m head as an example, different guide vane openings are provided for tests to obtain S characteristic curves under the guide vane openings. After the S characteristic curves are classified into the one or more large-opening S characteristic curves and the one or more small-opening S characteristic curves, the optimization region associated with the small-opening S characteristic curves is a region where each small-opening S characteristic curve with unit discharge as ordinates undergoes upward and downward variations within the preset range, with the intersection point formed between the small-opening S characteristic curve and the horizontal axis at zero unit discharge as a reference, wherein the preset range specifically refers to a range of -10% to +40% $Q_{11MAX}$, +40% represents a variation into the first quadrant, -10% represents a variation into the fourth quadrant, and $Q_{11MAX}$ denotes a maximum value of unit discharge on the ordinates of the small-opening S characteristic curve.

The small-opening S characteristic curve has the intersection point with the horizontal axis at zero unit discharge. Using this intersection point as a reference, upward and downward variations are applied to the small-opening S characteristic curve with unit discharge as ordinates within the preset range. The specific range of variation is a range of -10% to +40% $Q_{11MAX}$. Optimization within this range can address the problem of insufficient S characteristic margin. The determination of this range was established by the Applicant after numerous tests, which indicates that the range is related to the position of the runaway line and the horizontal axis. Generally, the runaway line is located around 30% $Q_{11MAX}$. The range between the runaway line and the horizontal axis, together with the margins at both ends, directly relates to a range of the S characteristic margin. By considering 10% $Q_{11MAX}$ at both ends, the final optimization range is determined as -10% to +40% $Q_{11MAX}$. Optimization within this range is sufficient to meet the requirement, and standardizing this range can effectively improve optimization efficiency.

Embodiment 4

Referring to FIG. 1, as one of the preferred embodiments of the method for optimizing S characteristic curves, the operation of the method are as follows:

a, establishing S characteristic curves of a pump-turbine: establishing, based on different guide vane openings, at least two types of S characteristic curves;

b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of 35% $a_0 \le X \le 100\% a_0$, and Y is within a range of $0 \le Y < 35\% a_0$;

c, dividing an optimization region based on the small-opening S characteristic curves: dividing the region between the braking zone and the reverse-pump zone based on the small-opening S characteristic curves as Region 1, wherein Region 1 specifically refers to a region where each small-opening S characteristic curve undergoes upward and downward variations within a preset range, with an intersection point formed between the small-opening S characteristic curve and a horizontal axis at zero unit discharge as a reference; and

d, optimizing the optimization region associated with the small-opening S characteristic curves: shifting the intersection point formed between the small-opening S characteristic curve and the horizontal axis at zero unit discharge along a direction where a unit speed on the horizontal axis increases, thereby driving a portion of the small-opening S characteristic curve near the intersection point to move along the direction where the unit speed on the horizontal axis increases; as such, this allows the S characteristic margin corresponding to the small-opening to be improved in a very simple and efficient manner, thereby further effectively improving the grid-synchronization characteristics of the unit.

The method may further include an operation of dividing one or more optimization regions based on the large-opening S characteristic curve: dividing a region between the braking zone and the reverse-pump zone based on the large-opening S characteristic curve as Region 3 (the third region), wherein Region 3 specifically refers to a region where the large-opening S characteristic curve undergoes upward and downward variations within a preset range, with an intersection point formed between the large-opening S characteristic curve and the horizontal axis at zero unit discharge as a reference, and dividing, as Region 2 (the second region), a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings.

This example represents the preferred embodiment that reflects the original intention and inventive concept of the present invention. Prior to this, no prior art has ever disclosed a method of pre-classifying the S characteristic curves according to different guide vane openings, specifically dividing them into "two-openings," namely the large-opening S characteristic curve and the small-opening S characteristic curve, and "three regions," namely Region 2 and Region 3 on the large-opening S characteristic curve and Region 1 on the small-opening S characteristic curve. Compared with LIU Yan-na's doctoral dissertation entitled "Effects of S-shaped Characteristics on Transient process of Pumped-hydro Energy Storage Station", this division approach enables, during hydraulic design, that when it is determined that the current S characteristic margin does not meet the requirement, optimization only needs to be performed on Region 1 of the small-opening S characteristic curve. This allows the S characteristic margin corresponding to the small-opening to be improved in a very simple and efficient manner, thereby further effectively improving the grid-synchronization characteristics of the unit. At the same time, combined with optimization of Regions 2 and 3 on the large-opening S characteristic curve, the results of transient process simulation can be further ensured.

Embodiment 5

Referring to FIG. 1, on the basis of Embodiment 4, as one of the preferred embodiments of the method for optimizing S characteristic curves, the operation of dividing the one or more optimization regions based on the large-opening S characteristic curve may further include: between the upward and downward variations within the preset ranges corresponding to Regions 3 and 2, the upward variation is toward the first quadrant, and the downward variation is toward the fourth quadrant. Further, in the operation of dividing the one or more optimization regions based on the large-opening S characteristic curve, for a 300 MW unit with a head of 400 m as an example, the specific division of the optimization region (Region 3) is: a region where the large-opening S characteristic curve with unit discharge as ordinates undergoes upward and downward variations within the preset range, with the intersection point formed between the large-opening S characteristic curve and the horizontal axis at zero unit discharge as a reference, wherein the preset range specifically refers to a range of $\pm 15\%$ $Q_{11MAX}$, and $Q_{11MAX}$ denotes a maximum value of unit discharge on the ordinates of the large-opening S characteristic curve. Further, in the operation of dividing the one or more optimization regions based on the large-opening S characteristic curve, for a 300 MW unit with a head of 400 m as an example, the large-opening S characteristic curve in Region 2 is varied upward and downward within the preset range with the intersection point as a reference, the intersection point intersecting the large-opening S characteristic curve and the runaway line, wherein the preset range specifically refers to a range of -10% to +30% $Q_{11MAX}$, +30% represents a variation into the first quadrant, -10% represents a variation into the fourth quadrant, and $Q_{11MAX}$ denotes a maximum value of unit discharge on ordinates of the large-opening S characteristic curve.

Embodiment 6

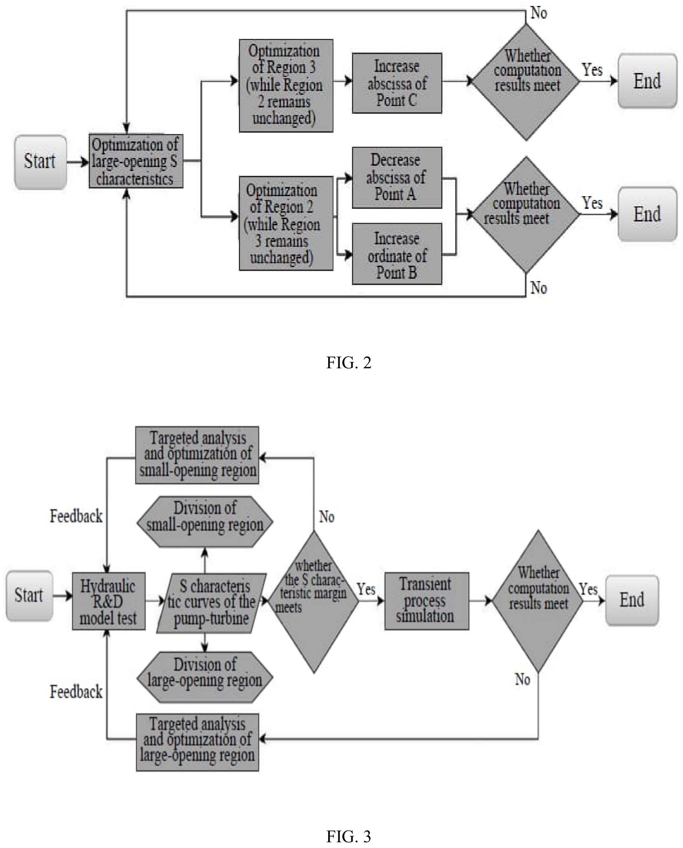

Referring to FIG. 1 and FIG. 2, on the basis of Embodiment 5, as one of the preferred embodiments of the method for optimizing S characteristic curves, the method may further include an operation of optimizing the one or more optimization regions associated with the large-opening S characteristic curve by:
while Region 2 associated with the large-opening S characteristic curve is kept unchanged, optimizing Region 3: increasing an abscissa of Point C on the S characteristic curve in Region 3, such that the unit speed of the large-opening S characteristic curve with the unit discharge being zero is increased, thereby driving the nearby portion of the S characteristic curve along the direction where the unit speed on the horizontal axis increases, and further improving the mean pressure at the draft-tube inlet. The abscissa of Point C corresponds to the abscissa of the intersection point between the large-opening S characteristic curve and the horizontal axis at zero unit discharge.

Embodiment 7

Referring to FIGS. 1 and 2, on the basis of Embodiment 5, as one of the preferred embodiments of the method for optimizing S characteristic curves, the method may further include an operation of optimizing the one or more optimization regions associated with the large-opening S characteristic curve by:
while Region 3 associated with the large-opening S characteristic curve is kept unchanged, optimizing Region 2 in any of three ways:

1) reducing an abscissa of Point A on the large-opening S characteristic curve in Region 2, the abscissa of Point A corresponding to an abscissa of a point at which the large-opening S characteristic curve has a maximum unit speed, such that the unit speed of Point A is reduced, and a portion of the large-opening S characteristic curve near Point A is driven to move along a direction of lower unit speed; or
2) increasing an ordinate of Point B on the large-opening S characteristic curve in Region 2, the ordinate of Point B corresponding to an ordinate of the intersection point between the large-opening S characteristic curve and the runaway line, such that the unit discharge of Point B is increased, thereby driving a portion of the large-opening S characteristic curve near Point B to move along a direction of increasing unit discharge; and
3) simultaneously performing the two optimization modes of 1) and 2).

Embodiment 8

Referring to FIGS. 1 and 2, on the basis of Embodiment 5, as one of the preferred embodiments of the method of optimizing S characteristic curves, Region 2 may further be optimized in three approaches while Region 3 associated with the large-opening S characteristic curve is kept unchanged, and the three optimization approaches can reduce the pulsating pressure at the draft-tube inlet.
13 according 10 or 11, further includes an operation of optimizing the one or more optimization regions associated with the large-opening S characteristic curve by:
simultaneously optimizing Regions 3 and 2 associated with the large-opening S characteristic curve, by:

1) reducing an abscissa of Point A on the large-opening S characteristic curve in Region 2, the abscissa of Point A corresponding to an abscissa of a point at which the large-opening S characteristic curve has a maximum unit speed, such that the unit speed of Point A is reduced, and a portion of the large-opening S characteristic curve near Point A is driven to move along a direction of lower unit speed; or

2) increasing an ordinate of Point B on the large-opening S characteristic curve in Region 2, the ordinate of Point B corresponding to an ordinate of the intersection point between the large-opening S characteristic curve and the runaway line, such that the unit discharge of Point B is increased, and a portion of the large-opening S characteristic curve near Point B is driven to move along a direction of increasing unit discharge; and

3) simultaneously performing the two optimization modes of 1) and 2),

4) increasing an abscissa of Point C on the S characteristic curve in Region 3, such that the unit speed of the large-opening S characteristic curve is increased when the unit discharge is zero.

Embodiment 9

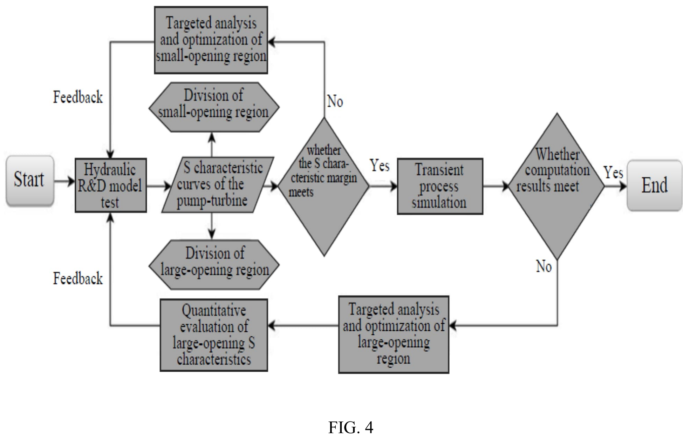

Referring to FIG. 4, the present invention further provides a method for quantitatively evaluating S characteristic curves, and the operation of the method are as follows:

a, establishing S characteristic curves of a pump-turbine: establishing, based on different guide vane openings, at least two types of S characteristic curves;

b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of 35% $a_0 \leq X \leq 100\%$ $a_0$, and Y is within a range of $0 \leq Y < 35\%$ $a_0$; and

c, dividing an optimization region based on the small-opening S characteristic curves: dividing a region between a braking zone and a reverse-pump zone based on the small-opening S characteristic curves as Region 1, wherein Region 1 specifically refers to a region where each small-opening S characteristic curve undergoes upward and downward variations within a preset range, with an intersection point formed between the small-opening S characteristic curve and a horizontal axis at zero unit discharge as a reference.

The method may further include an operation of dividing one or more optimization regions based on the large-opening S characteristic curve: dividing a region between the braking zone and the reverse-pump zone based on the large-opening S characteristic curve as Region 3, wherein Region 3 specifically refers to a region where the large-opening S characteristic curve undergoes upward and downward variations within a preset range, with an intersection point formed between the large-opening S characteristic curve and the horizontal axis at zero unit discharge as a reference, and dividing, as Region 2, a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings.

For the S characteristics at large openings, based on analysis of four-quadrant curves of multiple practical pumped storage power station projects, it is preliminarily considered that the transient process characteristics of the unit are positively correlated with the runaway unit discharge of the unit and negatively correlated with the variation of unit speed along the constant guide vane opening line in the "S" region.

Therefore, the ratio of the runaway unit discharge on the large-opening S characteristic curve to the variation of unit speed on the large-opening S characteristic curve is defined as a quantitative parameter $\delta$, i.e.,

$$\delta = K_1/K_2 \text{ (Formula 1)}$$

where in Formula 1, specific parameters are defined as follows:

$K_1$: An ordinate value of Point B which refers to the intersection point between the large-opening S characteristic curve and the runaway line, which represents runaway unit discharge at a given opening, the ordinate value expressed as $K_1 = Q_{11B}$; and

$K_2$: A difference between an abscissa value of Point A at which the large-opening S characteristic curve reaches a maximum unit speed and an abscissa value of Point C which refers to the intersection point between the large-opening S characteristic curve and the horizontal axis at zero unit discharge, which represents a variation of unit speed at a given opening, the difference expressed as $K_2 = n_{11A} - n_{11C}$.

In engineering practice, for the four-quadrant curves of pump-turbines at the same head, the larger the δ in Formula 1, the better the transient process characteristics of the pump-turbine. By optimizing the "S" characteristic curve to increase δ, the transient process characteristics can be effectively improved, which provides guidance for further optimization.

Embodiment 10

Referring to FIG. 3, the present invention further provides a bi-directional feedback method for S characteristic curves, including:

an operation of conducting a hydraulic R&D model test;
an operation of establishing S characteristic curves of a pump-turbine based on the hydraulic R&D model test;
an operation of determining whether an S characteristic margin of the S characteristic curves meets a design requirement;
in response to the design requirement being met, proceeding to an operation of transient process simulation;
in response to the design requirement being not met, proceeding to an operation of establishing, based on different guide vane openings, at least two types of S characteristic curves, an operation of classifying the S characteristic curves into one or more large-opening S characteristic curves and one or more small-opening S characteristic curves, an operation of dividing an optimization region based on the small-opening S characteristic curves, an operation of dividing one or more optimization regions based on the large-opening S characteristic curve, an operation of optimizing the optimization region associated with the small-opening S characteristic curves, and an operation of feeding back the optimized results to the hydraulic R&D model test; or
in response to the design requirement remaining unmet, repeating the operation of optimizing the optimization region associated with the small-opening S characteristic curves, and feeding back the optimized results until the S characteristic margin meets the design requirement; and
an operation of determining whether a result of the transient process simulation meets a requirement;
in response to the requirement being met, completing current hydraulic development design; or
in response to the requirement being not met, proceeding to an operation of optimizing the one or more optimization regions associated with the large-opening S characteristic curve, and feeding back the optimized results to the hydraulic R&D model test.

By comprehensively balancing hydraulic performance and transient process characteristics, the "two-openings and three-regions" method is adopted to gradually optimize the large-opening region of the "S" characteristic curves until both hydraulic performance and transient process characteristic parameters meet the requirement, at which point the "S" characteristic curves are determined. In this process, hydraulic development and transient process calculation complement each other, forming a bi-directional feedback design system.

Embodiment 11

Referring to FIG. 3, the present invention further provides a bi-directional feedback method for S characteristic curves. On the basis of Embodiment 10, regarding the two types of S characteristic curves, the S characteristic curves may further be classified into the one or more large-opening S characteristic curves and the one or more small-opening S characteristic curves, one type of S characteristic curves established at a guide vane opening of X° is classified as the one or more large-opening S characteristic curves, and the other type of S characteristic curves established at a guide vane opening of Y° is classified as the one or more small-opening S characteristic curves, and wherein with $a_0$ being a rated opening, X is within a range of $35\% \, a_0 \leq X \leq 100\% \, a_0$, and Y is within a range of $0 \leq Y < 35\% \, a_0$. Further, the operation of dividing the optimization region based on the small-opening S characteristic curves and the operation of dividing the one or more optimization regions based on the large-opening S characteristic curve include: dividing a region between a braking zone and a reverse-pump zone based on the small-opening S characteristic curves as Region 1, wherein Region 1 specifically refers to a region where each small-opening S characteristic curve undergoes upward and downward variations within a preset range, with an intersection point formed between the small-opening S characteristic curve and a horizontal axis at zero unit discharge as a reference.

Further, the operation of dividing the optimization region based on the small-opening S characteristic curves and the operation of dividing the one or more optimization regions based on the large-opening S characteristic curve include:

dividing a region between a braking zone and a reverse-pump zone based on the large-opening S characteristic curve as Region 3, wherein Region 3 specifically refers to a region where the large-opening S characteristic curve undergoes upward and downward variations within a preset range, with an intersection point formed between the large-opening S characteristic curve and a horizontal axis at zero unit discharge as a reference; and
dividing, as Region 2, a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings.

Embodiment 12

The hydraulic characteristics and transient process characteristics of a pumped storage unit influence and balance each other. In designing a hydraulic scheme, in addition to considering hydraulic performance such as energy, cavitation, and stability of pump-turbines, it is also necessary to comprehensively consider the transient process characteristics of the pump-turbines. The transient process characteristics of pump-turbines mainly depend on the "S" characteristic of the four-quadrant full characteristic curve. Within the "S" characteristic region, the flow patterns of the water are highly complex, and the pressure pulsations are also complicated. Different "S" characteristic regions of the four-quadrant curve have different effects and degrees of influence on the transient process characteristics of pump-turbines. The minimum pressure at the draft-tube inlet is a key indicator of transient process characteristics. According to the principle of linear superposition, it can be divided into two parts: mean pressure and pulsating pressure.

The embodiments focus on proposing a new procedure and method for optimizing the transient process characteristics of pump-turbines. The key points of the method are as follows:

First, dividing the regions of the "S" characteristic, namely the "two-openings and three-regions," and providing optimization methods for different regions to improve transient process characteristics;
Second, establishing a set of quantitative parameters of the large-opening "S" characteristic for evaluation to guide optimization direction; and
Third, comprehensively balancing hydraulic performance and transient process characteristics, and establishing a bi-directional feedback process for hydraulic development and transient process characteristic optimization using the method for quantitatively evaluating large-opening "S" characteristic and the "two-openings and three-regions" method.

Referring to FIGS. 1 to 4, the present invention further provides a bi-directional feedback method based on optimization and quantitative evaluation of S characteristic curves, including:

an operation of conducting a hydraulic R&D model test;
an operation of establishing S characteristic curves of a pump-turbine based on the hydraulic R&D model test;
an operation of determining whether an S characteristic margin of the S characteristic curves meets a design requirement;
in response to the design requirement being met, proceeding to an operation of transient process simulation;
in response to the design requirement being not met, proceeding to an operation of establishing, based on different guide vane openings, at least two types of S characteristic curves, an operation of classifying the S characteristic curves into one or more large-opening S characteristic curves and one or more small-opening S characteristic curves, an operation of dividing an optimization region based on the small-opening S characteristic curves, an operation of dividing one or more optimization regions based on the large-opening S characteristic curve, an operation of optimizing the optimization region associated with the small-opening S characteristic curves, and an operation of feeding back the optimized results to the hydraulic R&D model test; or
in response to the design requirement remaining unmet, repeating the operation of optimizing the optimization region associated with the small-opening S characteristic curves, and feeding back the optimized results until the S characteristic margin meets the design requirement; and
an operation of determining whether a result of the transient process simulation meets a requirement;
in response to the requirement being met, completing current hydraulic development design; or
in response to the requirement being not met, proceeding to an operation of optimizing the one or more optimization regions associated with the large-opening S characteristic curve, an operation of quantitatively evaluating the optimized results, and an operation of feeding back the quantitatively-evaluated optimized results to the hydraulic R&D model test.

Further, in the operation of quantitatively evaluating the optimization results, the ratio of the runaway unit discharge on the large-opening S characteristic curve to the variation of unit speed on the large-opening S characteristic curve is defined as a quantitative parameter.

By comprehensively balancing hydraulic performance and transient process characteristics, the quantitative evaluation method and the "two-openings and three-regions" method are adopted to gradually optimize the region of the "S" characteristic curves corresponding to large-openings until both hydraulic performance and transient process characteristic parameters meet the requirement, at which point the "S" characteristic curves are determined. In this process, hydraulic development and transient process calculation complement each other, forming a bi-directional feedback design system.

**Claims**

1. A method for optimizing S characteristic curves, **characterized in that** the method comprises the following operations:

   a, establishing S characteristic curves of a pump-turbine: establishing, based on different guide vane openings, at least two types of S characteristic curves;
   b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of 35% $a_0 \leq X \leq 100\%$ $a_0$, and Y is within a range of $0 \leq Y < 35\%$ $a_0$;
   c, dividing an optimization region based on the small-opening S characteristic curves: dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference; and
   d, optimizing the optimization region associated with the small-opening S characteristic curves: shifting the intersection point formed between the small-opening S characteristic curve and the horizontal axis at zero unit discharge along a direction where a unit speed on the horizontal axis increases, thereby driving a portion of the small-opening S characteristic curve near the intersection point to move along the direction where the unit speed on the horizontal axis increases.

2. The method for optimizing S characteristic curves according to claim 1, wherein, in operation b, with $a_0$ being the rated opening, X takes a value of 100% $a_0$, and Y takes a value of 30% $a_0$.

3. The method for optimizing S characteristic curves according to claim 1, wherein, in operation b, for a 300 MW unit with a head of 400 m, the guide vane opening of the pump-turbine varies between 0° and 26°, and wherein the large-opening S characteristic curve corresponds to a guide vane opening in a range of 9.1° to 26° and is represented by a rated opening line $n_{11}$-$Q_{11}$, while the small-opening S characteristic curves each correspond to a guide vane opening in a range of 0° to 9° and are represented by small-opening lines $n_{11}$-$Q_{11}$.

4. The method for optimizing S characteristic curves according to claim 1 or 2, wherein, in operation c, between the upward and downward variations within the preset range corresponding to the first region, the upward variation is toward a first quadrant, and the downward variation is toward a fourth quadrant.

5. The method for optimizing S characteristic curves according to claim 4, wherein, in operation c, for a 300 MW unit with a head of 400 m as an example, the guide vane openings are provided for tests to obtain the S characteristic curves under the guide vane openings; and
   after the S characteristic curves are classified into the one or more large-opening S characteristic curves and the one or more small-opening S characteristic curves, the optimization region associated with the small-opening S characteristic curves is a region where each small-opening S characteristic curve with unit discharge as ordinates undergoes upward and downward variations within the preset range along a vertical axis representing unit discharge, with the intersection point formed between the small-opening S characteristic curve and the horizontal axis at zero unit discharge as a reference, wherein the preset range specifically refers to a range of -10% to +40% $Q_{11MAX}$, +40% represents a variation into the first quadrant, -10% represents a variation into the fourth quadrant, and $Q_{11MAX}$ denotes a maximum value of unit discharge on the ordinates of the small-opening S characteristic curve.

6. A method for optimizing S characteristic curves, **characterized in that** the method comprises the following operations:

   a, establishing S characteristic curves of a pump-turbine: establishing, based on different guide vane openings, at least two types of S characteristic curves;
   b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of 35% $a_0 \leq$ X $\leq$ 100% $a_0$, and Y is within a range of $0 \leq$ Y < 35% $a_0$;

c, dividing an optimization region based on the small-opening S characteristic curves: dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference; and

d, optimizing the optimization region associated with the small-opening S characteristic curves: shifting the intersection point formed between the small-opening S characteristic curve and the horizontal axis at zero unit discharge along a direction where a unit speed on the horizontal axis increases, thereby driving a portion of the small-opening S characteristic curve near the intersection point to move along the direction where the unit speed on the horizontal axis increases;

wherein the method further comprises an operation of dividing one or more optimization regions based on the large-opening S characteristic curve: dividing a region between the braking zone and the reverse-pump zone based on the large-opening S characteristic curve as a third region, wherein the third region specifically refers to a region where the large-opening S characteristic curve undergoes upward and downward variations within a preset range, with an intersection point formed between the large-opening S characteristic curve and the horizontal axis at zero unit discharge as a reference, and dividing, as a second region, a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings.

7. The method for optimizing S characteristic curves according to claim 6, wherein, in the operation of dividing the one or more optimization regions based on the large-opening S characteristic curve, between the upward and downward variations within the preset ranges corresponding to the third and second regions, the upward variation is toward a first quadrant, and the downward variation is toward a fourth quadrant.

8. The method for optimizing S characteristic curves according to claim 6, wherein, in the operation of dividing the one or more optimization regions based on the large-opening S characteristic curve, for a 300 MW unit with a head of 400 m as an example, the optimization region referred to as the third region specifically is a region where the large-opening S characteristic curve with unit discharge as ordinates undergoes upward and downward variations within the preset range, with the intersection point formed between the large-opening S characteristic curve and the horizontal axis at zero unit discharge as a reference, wherein the preset range specifically refers to a range of $\pm 15\%$ $Q_{11MAX}$, and $Q_{11MAX}$ denotes a maximum value of unit discharge on the ordinates of the large-opening S characteristic curve.

9. The method for optimizing S characteristic curves according to claim 6, wherein, in the operation of dividing the one or more optimization regions based on the large-opening S characteristic curve, for a 300 MW unit with a head of 400 m as an example, the large-opening S characteristic curve in the second region is varied upward and downward within the preset range with the intersection point as a reference, the intersection point intersecting the large-opening S characteristic curve and the runaway line, wherein the preset range specifically refers to a range of -10% to +30% $Q_{11MAX}$, +30% represents a variation into a first quadrant, -10% represents a variation into a fourth quadrant , and $Q_{11MAX}$ denotes a maximum value of unit discharge on ordinates of the large-opening S characteristic curve.

10. The method for optimizing S characteristic curves according to claim 6, 8 or 9, further comprising an operation of optimizing the one or more optimization regions associated with the large-opening S characteristic curve by:
while the second region associated with the large-opening S characteristic curve is kept unchanged, optimizing the third region: increasing an abscissa of point C on the S characteristic curve in the third region, such that the unit speed of the large-opening S characteristic curve with the unit discharge being zero is increased, wherein the abscissa of point C corresponds to an abscissa of the intersection point between the large-opening S characteristic curve and the horizontal axis at zero unit discharge.

11. The method for optimizing S characteristic curves according to claim 6, 8 or 9, further comprising an operation of optimizing the one or more optimization regions associated with the large-opening S characteristic curve by:
while the third region associated with the large-opening S characteristic curve is kept unchanged, optimizing the second region in any of three ways:

1) reducing an abscissa of point A on the large-opening S characteristic curve in the second region, the abscissa of the point A corresponding to an abscissa of a point at which the large-opening S characteristic curve has a maximum unit speed, such that the unit speed of the point A is reduced, and a portion of the large-opening S characteristic curve near the point A is driven to move along a direction of lower unit speed; or
2) increasing an ordinate of point B on the large-opening S characteristic curve in the second region, the ordinate of the point B corresponding to an ordinate of the intersection point between the large-opening S characteristic curve and the runaway line, such that the unit discharge of the point B is increased, and a portion of the large-opening S characteristic curve near the point B is driven to move along a direction of increasing unit discharge; and
3) simultaneously performing the two optimization modes of 1) and 2).

12. The method for optimizing S characteristic curves according to claim 6, 8 or 9, further comprising an operation of optimizing the one or more optimization regions associated with the large-opening S characteristic curve by:
simultaneously optimizing the second and third regions associated with the large-opening S characteristic curve, by:

1) reducing an abscissa of point A on the large-opening S characteristic curve in the second region, the abscissa of the point A corresponding to an abscissa of a point at which the large-opening S characteristic curve has a maximum unit speed, such that the unit speed of the point A is reduced, and a portion of the large-opening S characteristic curve near the point A is driven to move along a direction of lower unit speed; or
2) increasing an ordinate of point B on the large-opening S characteristic curve in the second region, the ordinate of the point B corresponding to an ordinate of the intersection point between the large-opening S characteristic curve and the runaway line, such that the unit discharge of the point B is increased, and a portion of the large-opening S characteristic curve near the point B is driven to move along a direction of increasing unit discharge; and
3) simultaneously performing the two optimization modes of 1) and 2),
4) increasing an abscissa of point C on the S characteristic curve in the third region, such that the unit speed of the large-opening S characteristic curve is increased when the unit discharge is zero.

13. The method for optimizing S characteristic curves according to claim 6, wherein the operation of establishing the S characteristic curves of the pump-turbine is performed by:
fixing each guide vane opening for testing, arranging unit-speed values as abscissa to obtain corresponding unit-discharge values as ordinate, and connecting data points established through a smooth curve to form a S curve under the guide vane opening.

14. A method for quantitatively evaluating S characteristic curves, **characterized in that** the method comprises the following operations:

a, establishing S characteristic curves of a pump-turbine: establishing, based on different guide vane openings, at least two types of S characteristic curves;
b, classifying the S characteristic curves into one or more large-opening S characteristic curves and one or more small-opening S characteristic curves: among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of 35% $a_0 \leq X \leq$ 100% $a_0$, and Y is within a range of $0 \leq Y < 35\%$ $a_0$; and
c, dividing an optimization region based on the small-opening S characteristic curves: dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference;
wherein the method further comprises an operation of dividing one or more optimization regions based on the large-opening S characteristic curve: dividing a region between the braking zone and the reverse-pump zone based on the large-opening S characteristic curve as a third region, wherein the third region specifically refers to a region where the large-opening S characteristic curve undergoes upward and downward variations within a preset range, with an intersection point formed between the large-opening S characteristic curve and the horizontal axis at zero unit discharge as a reference, and dividing, as a second region, a region where the large-opening S characteristic curve undergoes upward and downward variations within a preset range, with an intersection point formed between the large-opening S characteristic curve and a runaway line as a reference, wherein the runaway line is a line connecting zero-torque points of a unit at the guide vane openings; and wherein a ratio of runaway unit discharge on the large-opening S characteristic curve to a variation of unit speed on the large-opening S characteristic curve is defined as a quantitative parameter $\delta$, and the ratio is expressed as:

$$\delta = K_1/K_2 \ (\text{Formula } 1)$$

where in Formula 1, specific parameters are defined as follows:

$K_1$: An ordinate value of point B which refers to the intersection point between the large-opening S characteristic curve and the runaway line, which represents runaway unit discharge at a given opening, the ordinate value expressed as $K_1 = Q_{11B}$; and
$K_2$: A difference between an abscissa value of point A at which the large-opening S characteristic curve reaches a maximum unit speed and an abscissa value of point C which refers to the intersection point between the large-opening S characteristic curve and the horizontal axis at zero unit discharge, which represents a variation of unit speed at a given opening, the difference expressed as $K_2 = n_{11A} - n_{11C}$.

15. A bi-directional feedback method for S characteristic curves, **characterized in that** the method comprises:

an operation of conducting a hydraulic research and development (R&D) model test;
an operation of establishing S characteristic curves of a pump-turbine based on the hydraulic R&D model test;
an operation of determining whether an S characteristic margin of the S characteristic curves meets a design requirement;

in response to the design requirement being met, proceeding to an operation of transient process simulation;
in response to the design requirement being not met, proceeding to an operation of establishing, based on different guide vane openings, at least two types of S characteristic curves, an operation of classifying the S characteristic curves into one or more large-opening S characteristic curves and one or more small-opening S characteristic curves, an operation of dividing an optimization region based on the small-opening S characteristic curves, an operation of dividing one or more optimization regions based on the large-opening S characteristic curve, an operation of optimizing the optimization region associated with the small-opening S characteristic curves, and an operation of feeding back the optimized results to the hydraulic R&D model test; or
in response to the design requirement remaining unmet, repeating the operation of optimizing the optimization region associated with the small-opening S characteristic curves, and feeding back the optimized results until the S characteristic margin meets the design requirement; and

an operation of determining whether a result of the transient process simulation meets a requirement;

in response to the requirement being met, completing current hydraulic development design; or
in response to the requirement being not met, proceeding to an operation of optimizing the one or more optimization regions associated with the large-opening S characteristic curve, and feeding back the optimized results to the hydraulic R&D model test.

16. The bi-directional feedback method for S characteristic curves according to claim 15, wherein, in operation of classifying the S characteristic curves into the one or more large-opening S characteristic curves and the one or more small-opening S characteristic curves, among the at least two types of S characteristic curves, one type of S characteristic curves established at a guide vane opening of X° is classified as the one or more large-opening S characteristic curves, and another type of S characteristic curves established at a guide vane opening of Y° is classified as the one or more small-opening S characteristic curves, and wherein with $a_0$ being a rated opening, X is within a range of 35% $a_0 \leq X \leq$ 100% $a_0$, and Y is within a range of $0 \leq Y < 35\%$ $a_0$.

17. The bi-directional feedback method for S characteristic curves according to claim 15,
wherein operation of dividing the optimization region based on the small-opening S characteristic curves and the operation of dividing the one or more optimization regions based on the large-opening S characteristic curve comprise:

dividing a region between a braking zone and a reverse-pump zone based on the small-opening S characteristic curves as a first region, wherein the first region specifically refers to a region where each small-opening S characteristic curve undergoes upward and downward variations within a preset range, with an intersection point formed between the small-opening S characteristic curve and a horizontal axis at zero unit discharge as a reference.

18. The bi-directional feedback method for S characteristic curves according to claim 15, wherein the operation of dividing the optimization region based on the small-opening S characteristic curves and the operation of dividing the one or more optimization regions based on the large-opening S characteristic curve comprise:

dividing a region between a braking zone and a reverse-pump zone based on the large-opening S characteristic curve as a third region, wherein the third region specifically refers to a region where the large-opening S characteristic curve undergoes upward and downward variations within a preset range, with an intersection point formed between the large-opening S characteristic curve and a horizontal axis at zero unit discharge as a reference; and
dividing, as a second region, a region where the large-opening S characteristic curve undergoes upward and downward variations within a preset range, with an intersection point formed between the large-opening S characteristic curve and a runaway line as a reference.

19. A bi-directional feedback method for S characteristic curves, **characterized in that** the method comprises:

an operation of conducting a hydraulic R&D model test;
an operation of establishing S characteristic curves of a pump-turbine based on the hydraulic R&D model test;
an operation of determining whether an S characteristic margin of the S characteristic curves meets a design requirement;

in response to the design requirement being met, proceeding to an operation of transient process simulation;
in response to the design requirement being not met, proceeding to an operation of establishing, based on different guide vane openings, at least two types of S characteristic curves, an operation of classifying the S characteristic curves into one or more large-opening S characteristic curves and one or more small-opening S characteristic curves, an operation of dividing an optimization region based on the small-opening S characteristic curves, an operation of dividing one or more optimization regions based on the large-opening S characteristic curve, an operation of optimizing the optimization region associated with the small-opening S characteristic curves, and an operation of feeding back the optimized results to the hydraulic R&D model test; or
in response to the design requirement remaining unmet, repeating the operation of optimizing the optimization region associated with the small-opening S characteristic curves, and feeding back the optimized results until the S characteristic margin meets the design requirement; and

an operation of determining whether a result of the transient process simulation meets a requirement;

in response to the requirement being met, completing current hydraulic development design; or
in response to the requirement being not met, proceeding to an operation of optimizing the one or more optimization regions associated with the large-opening S characteristic curve, an operation of quantitatively evaluating the optimized results, and an operation of feeding back the quantitatively-evaluated optimized results to the hydraulic R&D model test.

20. The bi-directional feedback method for S characteristic curves according to claim 19, wherein, in the operation of quantitatively evaluating the optimized results, a ratio of runaway unit discharge on the large-opening S characteristic curve to a variation of unit speed on the large-opening S characteristic curve is defined as a quantitative parameter.

FIG. 1

EP 4 708 109 A1

FIG. 2

FIG. 3

FIG. 4

# INTERNATIONAL SEARCH REPORT

| International application No. |
|---|
| **PCT/CN2025/078212** |

**A.    CLASSIFICATION OF SUBJECT MATTER**

G06F30/17(2020.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, DWPI, VEN, USTXT, EPTXT, WOTXT, IEEE, CNKI, 必应, BING, 百度, BAIDU: 水泵水轮机, S特性曲线, 优化, 导叶开度, 大, 小, 制动区, 反水泵区, 飞逸线, 量化评估, S特性余量, S区裕度, 双向, 反馈, pump turbine, S characteristic curve, optimize, guide vane opening, large, small, braking zone, reverse pump zone, runaway line, quantitative evaluation, S characteristic margin, S zone margin, bidirectional, feedback

**C.    DOCUMENTS CONSIDERED TO BE RELEVANT**

| Category* | Citation of document, with indication, where appropriate, of the relevant passages | Relevant to claim No. |
|---|---|---|
| PX | CN 118194477 A (DONGFANG ELECTRIC MACHINERY CO., LTD.) 14 June 2024 (2024-06-14) <br> claims 1-20 | 1-20 |
| A | 凡家异 等 (FAN, Jiayi et al.). "S特性优化对改善甩负荷时尾水管进口压力的影响研究 (Non-official translation: Study on the Influence of S-characteristic Optimization on Improving the Draft Tube Inlet Pressure During Load Rejection)" <br> 第二十一次中国水电设备学术讨论会论文集 (Non-official translation: Proceedings of the 21st China Hydropower Equipment Academic Symposium), 31 October 2017 (2017-10-31), <br> pages 264-277 | 1-20 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 June 2025** | **07 June 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2025/078212** |

### C. DOCUMENTS CONSIDERED TO BE RELEVANT

| Category* | Citation of document, with indication, where appropriate, of the relevant passages | Relevant to claim No. |
|---|---|---|
| A | 王杰飞 等 (WANG, Jiefei et al.). "一种新的水泵水轮机全特性曲线处理方法及其工程应用 (New Transformation Method for Complete Characteristic Curves of Pump-turbines and its Engineering Application)" 水力发电学报 (Journal of Hydroelectric Engineering). Vol. 34, No. 3, 31 March 2015 (2015-03-31), ISSN: 1003-1243, pages 164-169 | 1-20 |
| A | 凡家异 等 (FAN, Jiayi et al.). "水泵水轮机四象限曲线"S"特性量化评判方法的初步研究 (Preliminary Study on the Quantitative Evaluation Method of "S" Characteristic of the Pump Turbine Four Quadrants Curves)" 水电与抽水蓄能 (Hydropower and Pumped Storage), Vol. 4, No. 1, 20 February 2018 (2018-02-20), ISSN: 2096-093X, pages 57-62 | 1-20 |
| A | EP 0644331 A1 (SULZER-ESCHER WYSS AG) 22 March 1995 (1995-03-22) entire document | 1-20 |

Form PCT/ISA/210 (second sheet) (July 2022)

**INTERNATIONAL SEARCH REPORT**
Information on patent family members

International application No.

**PCT/CN2025/078212**

| Patent document cited in search report | | | Publication date (day/month/year) | Patent family member(s) | | | Publication date (day/month/year) |
|---|---|---|---|---|---|---|---|
| CN | 118194477 | A | 14 June 2024 | CN | 118194477 | B | 12 July 2024 |
| EP | 0644331 | A1 | 22 March 1995 | EP | 0644331 | B1 | 12 November 1997 |
| | | | | DE | 59307681 | D1 | 18 December 1997 |
| | | | | ATE | 160206 | T1 | 15 November 1997 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHOU YI** ; **GOU DONGMING et al.** Pressure Pulsation in the Transient Process of Storage power stations. *1998 Annual Academic Conference of the 98 Special Committee on Pumped Storage of the China Society for Hydropower Engineering*, 08 December 2001
- **YOU QIUSEN**. Study on the Influence of Reversible Unit Model Characteristic Curves on Transient Process. *2014 Collection of Pumped Storage Power Station Construction*, 18 November 2014
- **RONG HONG** ; **SONG XUFENG** ; **YAND WENDAO** ; **PU NANNAN** ; **QIN XIAOFENG et al.** Research of Determining Method to ''S'' Characteristics for Pumped Storage Units. *Hydropower and Pumped Storage*, 02 April 2016
- **LIU YAN-NA**. Effects of S-shaped Characteristics on Transient process of Pumped-hydro Energy Storage Station. *doctoral dissertation at Wuhan University*, 01 May 2016

- **FAN JIAYI** ; **WEN SHUJIE** ; **CHEN TAIPING** ; **ZHANG JIAN** ; **WANG LUNQI et al.** Preliminary Study on the Quantitative Evaluation Method of ''S'' Characteristic of the Pump Turbine Four Quadrants Curves. *Hydropower and Pumped Storage*, 20 February 2018
- **FAN JIAYI** ; **WEN SHUJIE** ; **CHEN TAIPING** ; **WANG LUNQI** ; **ZHANG JIAN et al.** Study on the Influence of S Characteristic Optimization on Draft-Tube Inlet Pressure during Load Rejection. *Proceedings of the 21st Academic Symposium on Hydropower Equipment in China*, October 2017
- Basic Technical Conditions for Mixed-Flow Pump-Turbines. *GB 22581*
- Effects of S-shaped Characteristics on Transient process of Pumped-hydro Energy Storage Station. *LIU Yan-na's doctoral dissertation*